# FASCICULE DE BREVET EUROPEEN

(11) **EP 3 016 315 B1**
(45) Date de publication et mention de la délivrance du brevet: **18.08.2021**
(21) Numéro de dépôt: 15191768.9
(22) Date de dépôt: 27.10.2015
(51) Int. Cl.: H04L 9/32

(54) **PROCÉDÉ D'AUTHENTIFICATION D'UN UTILISATEUR DÉTENANT UN CERTIFICAT BIOMÉTRIQUE**
AUTHENTIFIZIERUNGSVERFAHREN EINES BENUTZERS, DER IN BESITZ EINES BIOMETRISCHEN ZERTIFIKATS IST
METHOD FOR AUTHENTICATING A USER HOLDING A BIOMETRIC CERTIFICATE

(30) Priorité: 28.10.2014 FR 1460347
(43) Date de publication de la demande: 04.05.2016
(73) Titulaire: Idemia Identity & Security France, 92400 Courbevoie (FR)
(72) Inventeur: CHABANNE, Hervé, 92130 Issy Les Moulineaux (FR); BRINGER, Julien, 92130 Issy Les Moulineaux (FR); CIPIERE, Olivier, 92130 Issy Les Moulineaux (FR); HUGEL, Rodolphe, 92130 Issy Les Moulineaux (FR)
(74) Mandataire: Regimbeau

(56) Documents cités:
- EP-A2- 1 237 327
- WO-A1-2006/008395
- WO-A1-2007/036763
- WO-A1-2008/106336
- US-A1- 2007 031 009
- US-A1- 2010 306 550

## Description

### DOMAINE TECHNIQUE GENERAL

La présente invention concerne le domaine de la certification d'identité. Plus précisément, elle concerne un procédé d'authentification à l'aide d'un certificat numérique comprenant une donnée d'authentification biométrique.

### ETAT DE LA TECHNIQUE

De nombreuses procédures administratives ou bancaires de la vie courante nécessitent d'apporter la preuve de son identité. Pour cela, chacun dispose de divers documents d'identité tels qu'une carte d'identité ou un passeport. Afin de constituer une preuve valide de l'identité de leur détenteur, de tels documents ne sont délivrés qu'à l'issue d'une procédure administrative au cours de laquelle le demandeur doit justifier de son identité à l'aide de nombreux documents tels qu'un certificat de naissance. Il est néanmoins possible pour un faussaire d'usurper l'identité d'une victime en falsifiant un document d'identité ou bien en usurpant l'identité de la victime au cours de la procédure de délivrance.

Afin d'éviter de telles usurpations d'identité, il est possible d'authentifier une personne non plus sur la base d'un document d'identité mais à partir d'une donnée biométrique, plus difficile à falsifier ou usurper. Ainsi certains contrôles d'accès à des zones d'accès restreint mettent en œuvre une authentification biométrique à partir d'une donnée d'iris, une empreinte digitale ou une empreinte ADN. Dans le cadre d'une telle authentification, l'identité d'autrui est beaucoup plus difficile à usurper. Néanmoins, une telle authentification nécessite de maintenir une base de données mémorisant les données biométriques de tous les utilisateurs à authentifier. Une telle base de données peut poser un problème vis-à-vis du respect de la vie privée des personnes dont les données biométriques sont mémorisées dans la base de données. En effet ces données peuvent être employées pour identifier ces personnes à leur insu. De plus, particulièrement dans le cas d'une empreinte ADN, de telles données peuvent être employées pour déduire des informations sur ces personnes telles que leur origine ethnique, la probabilité qu'elles développent certaines maladies etc...

Les documents WO 2007/036763 A1 et WO 2006/008395 A1 divulguent des procédés d'authentification biométrique.

Il existe donc un besoin d'un procédé d'authentification permettant d'authentifier une personne de manière sûre sans que les informations mémorisées pour mettre en œuvre ce procédé ne puissent être employées pour identifier une personne à son insu ou pour déduire des informations concernant cette personne.

### PRESENTATION DE L'INVENTION

L'invention et définie par les revendications.

Selon un premier aspect, l'invention concerne un procédé de génération d'un certificat biométrique d'un utilisateur mis en œuvre par un dispositif de traitement de données d'une autorité de certification caractérisé en ce qu'il comprend une étape de génération d'un certificat pour ledit utilisateur comprenant des données relatives à l'identité de l'utilisateur et des données d'authentification tronquées dudit utilisateur générées selon un procédé de génération d'une donnée d'authentification biométrique, ledit procédé de génération d'une donnée d'authentification biométrique comprenant des étapes de :
- acquisition de premières données biométriques dudit utilisateur,
- génération d'une première preuve de connaissance desdites premières données biométriques à partir des premières données biométriques acquises et d'une fonction pseudo aléatoire ;
- génération d'une première donnée d'authentification tronquée en appliquant une fonction de troncature à ladite première preuve de connaissance générée.

Un tel certificat permet à son détenteur d'apporter une preuve de son identité, par exemple au cours de démarches administratives ou judiciaires. Les données tronquées permettent d'authentifier un utilisateur avec un taux d'erreur réduit mais ne permettent pas de l'identifier

Ledit procédé de génération d'une donnée d'authentification biométrique peut comprendre en outre, pour au moins une erreur à traiter parmi un ensemble d'erreurs tolérables déterminé :
- une étape de génération de premières données biométriques dérivées en ajoutant ladite erreur aux premières données biométriques acquises,
- une étape de génération de premières preuves de connaissance dérivées à partir des premières données biométriques dérivées générées et de ladite fonction pseudo aléatoire, et
- une étape de génération de premières données d'authentification tronquées dérivées en appliquant ladite fonction de troncature auxdites premières preuves de connaissance dérivées générées.

Ceci permet de prendre en compte certaines erreurs considérées comme tolérables pouvant intervenir au cours de la mise en œuvre du procédé, et de ne pas rejeter la demande d'authentification d'un utilisateur authentique malgré la survenance d'une telle erreur. La prise en compte de ces erreurs en amont de l'authentification permet d'alléger le procédé d'authentification mis en œuvre ultérieurement.

Le dispositif de traitement de données de l'autorité de certification détenant une clé de chiffrement secrète, l'étape de génération du certificat pour ledit utilisateur peut comprendre une étape de chiffrement des données d'authentification tronquées dudit utilisateur.

Un tel chiffrement permet de se prémunir contre une utilisation malicieuse d'un certificat dont l'exploitation requiert alors la participation active de l'autorité de certification.

Selon un deuxième aspect, l'invention concerne un procédé d'authentification d'un utilisateur détenant un certificat biométrique généré selon le procédé de génération de certificat selon le premier aspect, ledit procédé d'authentification comprenant des étapes de :
- acquisition de deuxièmes données biométriques dudit utilisateur à authentifier ;
- génération d'une deuxième preuve de connaissance desdites deuxièmes données biométriques à partir des deuxièmes données biométriques acquises et de ladite fonction pseudo aléatoire ;
- génération d'une deuxième donnée d'authentification tronquée en appliquant ladite fonction de troncature à ladite deuxième preuve de connaissance générée ;
- acquisition de la première donnée d'authentification tronquée ou d'une première donnée d'authentification tronquée dérivée stockée dans le certificat ;
- comparaison de la première donnée d'authentification tronquée ou de la première donnée d'authentification tronquée dérivée et de ladite deuxième donnée d'authentification tronquée.

Un tel procédé d'authentification permet bien d'authentifier le détenteur d'un certificat à partir de ses données biométriques sans que celles-ci ne soient stockées, ce qui améliore le respect de la vie privée de ce détenteur.

Ledit procédé selon le deuxième aspect peut comprendre en outre :
- pour au moins une erreur tolérable à tester parmi un ensemble d'erreurs tolérables déterminé, une étape de génération de deuxièmes données biométriques dérivées en ajoutant ladite erreur aux deuxièmes données biométriques acquises;
- pour chaque erreur à tester, une étape de génération d'une deuxième preuve de connaissance dérivée à partir des deuxièmes données biométriques dérivées générées et de ladite fonction pseudo aléatoire et une étape de génération d'une deuxième donnée d'authentification tronquée dérivée en appliquant ladite fonction de troncature à ladite deuxième preuve de connaissance dérivée générée ;
- une étape d'acquisition d'une première donnée d'authentification tronquée ou d'une première donnée d'authentification tronquée dérivée obtenue à partir dudit certificat,
- une étape de comparaison de la première donnée d'authentification tronquée ou de la première donnée d'authentification tronquée dérivée acquise et des deuxièmes données d'authentification tronquées dérivées générées.

Ceci permet de prendre en compte certaines erreurs tolérables lors de la mise en œuvre d'une authentification, par exemple afin de prendre en compte de nouvelles erreurs tolérables non prises en compte lors de la création du certificat.

L'étape d'acquisition de la première donnée d'authentification tronquée du procédé d'authentification selon le deuxième aspect d'un utilisateur détenant un certificat biométrique généré selon le procédé de génération de certificat selon le premier aspect peut comprendre une étape de déchiffrement, à l'aide de la clé de chiffrement, de la première donnée d'authentification tronquée chiffrée acquise.

Ceci permet de prendre connaissance pour l'authentification des données d'authentification stockées dans le certificat sous forme chiffrée, ce qui protège le détenteur du certificat d'une utilisation frauduleuse de ces données.

Selon une première mise en œuvre de l'invention, l'étape de génération d'une preuve de connaissance de données biométriques peut comprendre une étape de génération d'un hash des données biométriques mise en œuvre en appliquant une fonction de hachage aux données biométriques.

Grâce à un tel hachage les données stockées dans un certificat ne peuvent pas être employées pour prendre connaissances d'informations concernant la condition médicale ou l'origine ethnique du détenteur du certificat.

La preuve de connaissance peut alors être générée à l'aide de ladite fonction de hachage et d'une clé de hachage secrète stockée uniquement par l'autorité de certification.

L'utilisation d'une telle clé de hachage secrète rend nécessaire la participation de l'autorité de certification et renforce la protection du procédé contre une usurpation d'identité.

Selon une deuxième mise en œuvre de l'invention, l'étape de génération d'une preuve de connaissance de données biométriques peut également comprendre une étape de calcul d'une exponentiation modulaire d'une valeur uniformément distribuée obtenue à partir des données biométriques et de ladite fonction pseudo aléatoire afin de rendre plus difficile l'accès auxdites données biométriques en raison de la difficulté de calcul d'un logarithme discret.

L'étape de génération d'une preuve de connaissance de données biométriques peut alors comprendre en outre des étapes de :
- acquisition d'un paramètre de dérivation h vérifiant la formule : h = g^r avec r un nombre aléatoire, g un générateur d'un groupe d'ordre premier p, g et p étant des données publiques ;
- calcul de la preuve de connaissance à l'aide de la formule : h^X ou hash(h^X) avec X une valeur obtenue à partir desdites données biométriques et de ladite fonction pseudo aléatoire, et hash une fonction de hachage.

Une telle exponentiation étant difficilement inversible en un temps raisonnable, ceci garanti que les données biométriques du détenteur du certificat ne peuvent pas être retrouvées à partir d'une telle preuve de connaissance.

Selon une troisième mise en œuvre de l'invention, la fonction de troncature peut appliquer une troncature sur n bits, n étant fonction de la probabilité d'occurrence des erreurs tolérables.

Le choix judicieux de la longueur de la troncature permet de rendre impossible l'identification d'une personne à partir de ses données biométriques et d'une base de certificats tout en minimisant la probabilité de faux positif lors d'une authentification, même en prenant en compte lors de celle-ci certaines erreurs tolérables.

Selon un troisième aspect, l'invention concerne un produit programme d'ordinateur comprenant des instructions de code de programme pour l'exécution des étapes du procédé selon le premier aspect ou le deuxième aspect lorsque ledit programme est exécuté sur un ordinateur.

Selon un quatrième aspect, l'invention concerne un serveur de certification caractérisé en ce qu'il comprend un dispositif de traitement de données configuré pour mettre en œuvre un procédé de génération d'un certificat biométrique d'un utilisateur selon le premier aspect.

De tels produit programme d'ordinateur et serveur de certification présentent les mêmes avantages que ceux évoqués pour le procédé selon le premier aspect ou le deuxième aspect.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un exemple d'architecture d'un système d'authentification selon un mode de réalisation de l'invention ;
- la figure 2 illustre une suite de nucléotides d'un utilisateur à authentifier à partir de laquelle est déterminé un profil ADN STR;
- la figure 3 est un diagramme schématisant une première mise en œuvre d'un procédé de génération d'une donnée d'authentification biométrique d'un utilisateur et d'un procédé de génération d'un certificat biométrique dudit utilisateur selon l'invention ;
- la figure 4 est un diagramme schématisant une deuxième mise en œuvre d'un procédé de génération d'une donnée d'authentification biométrique d'un utilisateur et d'un procédé de génération d'un certificat biométrique dudit utilisateur selon l'invention prenant en compte un ensemble d'erreurs tolérables déterminé ;
- la figure 5 est un diagramme schématisant une première mise en œuvre d'un procédé d'authentification d'un utilisateur détenant un certificat biométrique selon l'invention ;
- la figure 6 est un diagramme schématisant une deuxième mise en œuvre d'un procédé d'authentification d'un utilisateur détenant un certificat biométrique selon l'invention prenant en compte un ensemble d'erreurs tolérables déterminé;
- la figure 7 est un diagramme schématisant une troisième mise en œuvre d'un procédé de génération d'une donnée d'authentification biométrique d'un utilisateur et d'un procédé de génération d'un certificat biométrique dudit utilisateur selon l'invention ;
- la figure 8 est un diagramme schématisant une troisième mise en œuvre d'un procédé d'authentification d'un utilisateur détenant un certificat biométrique selon l'invention ;

### DESCRIPTION DETAILLEE

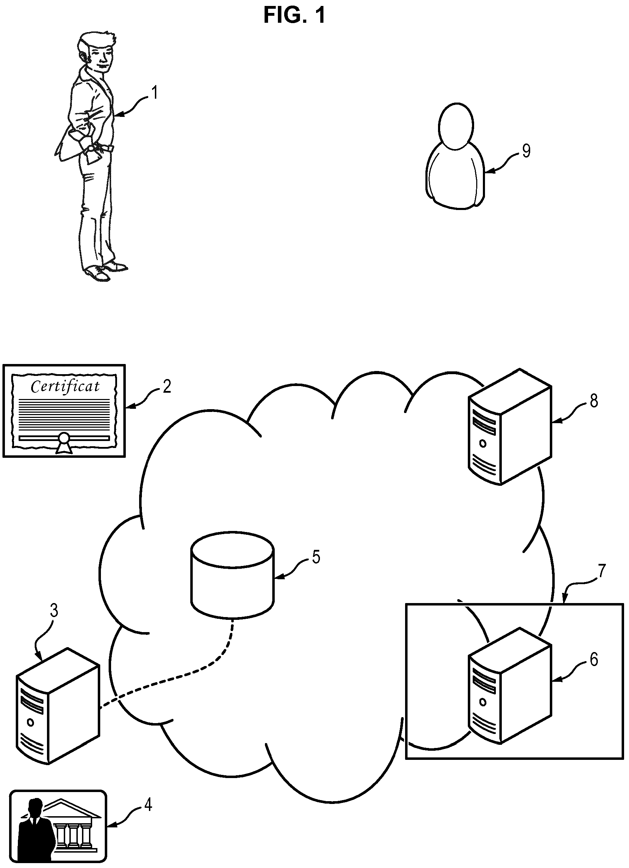

La présente invention concerne une mise en œuvre, dans un système d'authentification illustré en **figure 1**, d'un procédé d'authentification d'un utilisateur 1 détenant un certificat biométrique 2 généré par un dispositif de traitement de données 3 d'une autorité de certification 4 à partir de données biométriques dudit utilisateur.

Comme représenté en figure 1, le dispositif de traitement de données 3 de ladite autorité de certification 4 permettant de générer des certificats peut être compris dans un serveur de certification et peut être connecté à une base de données 5 utilisable pour stocker tout ou partie desdits certificats.

Un tel certificat biométrique généré permet de relier des attributs d'identité de l'utilisateur, dénommées par la suite données relatives à l'identité de l'utilisateur, tels que son nom, son genre, sa date de naissance, son lieu de naissance, l'identité de ses parents... avec une valeur dérivée de données biométriques de l'individu. Lors de la génération d'un certificat, l'autorité de certification signe ce certificat afin de valider l'association dans le certificat des données relatives à l'identité du détenteur du certificat avec la valeur dérivée de ses données biométriques. Chaque certificat généré peut être conservé par son détenteur sur un dispositif d'identité tel qu'une carte à puce ou sur un extrait d'acte de naissance au format papier, par exemple à l'aide d'un code barre à deux dimensions (2D barcode), et/ou par l'autorité de certification dans la base de données 5 pendant une durée prédéterminée par exemple la durée de vie de l'utilisateur. Un tel certificat peut être utilisé par son détenteur pour attester de son identité au cours de procédures de génération d'autres documents d'identité ou au cours de procédures judiciaires, par exemple en cas de vol d'identité de l'utilisateur.

Les données biométriques utilisées pour générer un tel certificat peuvent être acquises par un dispositif de traitement 6 d'un laboratoire 7. Un tel laboratoire est préférentiellement distinct de l'autorité de certification 4 mais peut également être confondu avec celle-ci. Ces données biométriques peuvent être tout type de données biométriques stables dans le temps, invariables lors d'acquisitions successives, non intrusives et ne divulguant aucune caractéristique physique de l'utilisateur. Ainsi de telles données biométriques peuvent être des empreintes digitales, des empreintes de l'iris de l'utilisateur ou tout profil génétique partiel rendant possible l'authentification d'une personne à partir d'une petite quantité de ses tissus biologiques (bulbe de cheveux, sang, salive, sperme). Le dispositif de traitement du laboratoire peut alors comprendre des moyens d'acquisition adéquats tels qu'un scanner d'iris ou un dispositif de prélèvement de sang ou de salive.

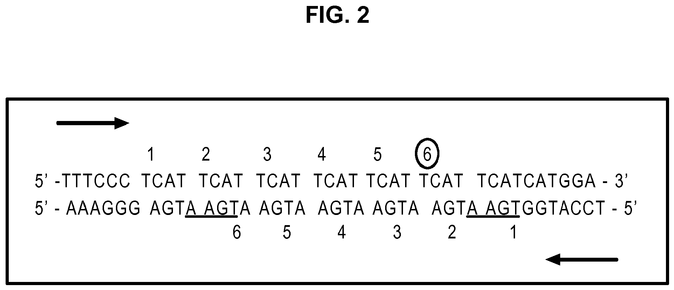

De telles données biométriques peuvent être un profil ADN extrait des tissus biologiques de la personne, par exemple un profil ADN STR (« Short Tandem Repeats »). De tels profils ADN STR sont basés sur des séquences répétées courtes de nucléotides. Les profils ADN STR acquis sont localisés dans une région non codante de l'ADN pour qu'un nombre minimum d'informations soient fournis sur la personne, par exemple que ni sa condition physique, ni sa filiation ou ses origines ethniques ne soient dévoilées. Un tel profil ADN STR indique pour chaque allèle d'une paire d'allèles d'une telle région le nombre de répétions successives d'une séquence donnée de nucléotides. Un profil ADN STR comprend alors pour chaque paire d'allèles analysée une paire de nombres. A titre d'exemple, la **figure 2** représente une suite de nucléotides correspondant à un allèle de l'ADN d'un individu appartenant à une paire d'allèles. Cette suite présente six répétitions de la séquence « TCAT ». Dans le cas où l'autre allèle de cette paire présenterait cinq répétitions de cette même séquence, le profil ADN STR de l'individu pourra alors comprendre pour cette paire d'allèles la paire de nombres (6, 5).

Les profils employés peuvent par exemple être générés à partir de l'analyse de dix paires d'allèles. De tels profils présentent alors un nombre de combinaisons permettant d'obtenir un pouvoir de discrimination de 99,9999999% suffisant pour pouvoir différencier de façon certaine un individu de l'ensemble des autres individus de la planète.

Le but de l'invention est néanmoins de proposer un procédé d'authentification permettant à un individu de prouver son identité avec une faible probabilité de faux positif mais ne permettant pas d'identifier de façon certaine un individu à partir d'un prélèvement biométrique. Pour cela, des données d'authentification biométriques présentant un pouvoir discriminant plus faible sont déduites des profils ADN STR acquis par le laboratoire 7.

A cette fin, les données biométriques acquises peuvent être traitées à l'aide d'une fonction pseudo-aléatoire telle qu'une fonction de hachage, et tronquées.

L'application d'une fonction de hachage permet de ne révéler dans le certificat aucune partie de l'ADN de l'individu à authentifier et de distribuer les données dans l'ensemble de l'espace d'arrivée d'une telle fonction. L'application d'une troncature permet de limiter le nombre de données d'authentification biométriques différentes possibles. Les certificats de plusieurs individus différents pourront alors comprendre la même donnée d'authentification biométrique, empêchant ainsi l'identification d'un individu à partir de son empreinte ADN et des certificats stockés dans la base de données de l'autorité de certification. A titre d'exemple, en tronquant les données biométriques sur dix bits, les données d'authentification biométriques obtenues peuvent prendre 1024 valeurs, rendant impossible toute identification mais maintenant la probabilité d'authentification positive erronée sous 0,1%.

Les opérations permettant d'obtenir les données d'authentification biométriques d'un individu à partir des premières données biométriques acquises par le dispositif de traitement 6 du laboratoire 7 peuvent être mises en œuvre par ce même dispositif de traitement 6, par le dispositif de traitement 3 de l'autorité de certification 4 ou bien réparties entre ces deux entités. Certaines de ces opérations peuvent également être mises en œuvre par un dispositif de traitement 8 d'une entité de génération de données d'authentification 9 indépendante du laboratoire 7 et de l'autorité de certification 4.

### Génération d'une donnée d'authentification biométrique d'un utilisateur

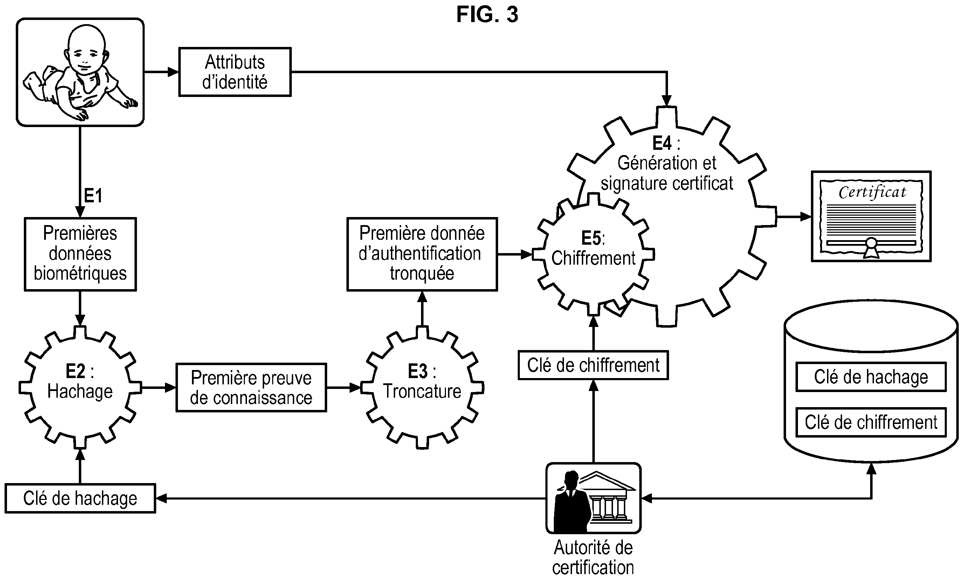

Plus précisément, préalablement à la mise en œuvre du procédé d'authentification, un procédé de génération d'une donnée d'authentification biométrique d'un utilisateur illustré sur la **figure 3** peut être mis en œuvre.

Lors d'une première étape d'acquisition E1, de premières données biométriques dudit utilisateur sont acquises par le dispositif de traitement 6 du laboratoire 7. Dans le cas d'un profil STR, ces données biométriques peuvent être un ensemble DNA STR de paires de nombres correspondant aux nombres de répétitions de séquences de nucléotides dans des paires d'allèles analysées.

A partir des premières données biométriques acquises et d'une fonction pseudo aléatoire, une première preuve de connaissance desdites premières données biométriques est générée lors d'une première étape de génération de preuve E2 pouvant être mise en œuvre par le dispositif de traitement du laboratoire 7, de l'entité de génération de données d'authentification 9 ou de l'autorité de certification 4. De préférence cette étape n'est pas mise en œuvre par l'autorité de certification afin d'éviter un risque d'utilisation frauduleuse du profil ADN de l'individu en cas de compromission de l'autorité de certification.

Une fonction de troncature est enfin appliquée à ladite première preuve de connaissance générée afin de générer une première donnée d'authentification tronquée lors d'une première étape de troncature E3 pouvant être mise en œuvre par le dispositif de traitement du laboratoire 7, de l'entité de génération de données d'authentification 9 ou de l'autorité de certification 4.

De manière optionnelle la première donnée d'authentification tronquée peut être conservée par l'autorité de certification pour être utilisée lors de la mise en œuvre d'un procédé d'authentification.

A l'issue de la première étape de troncature E3, les premières données biométriques et la première preuve de connaissance peuvent être détruites de façon à éviter leur utilisation ultérieure à des fins malhonnêtes.

### Prise en compte des erreurs

Des erreurs peuvent intervenir lors de la détermination d'un profil biométrique, particulièrement lors de l'acquisition des données biométriques, par exemple en raison de la présence de bruit dans les signaux employés pour déterminer un profil ADN ou bien à cause de problèmes d'étalonnage des instruments chargés de l'analyse chimique des prélèvements.

Les erreurs possibles les plus fréquentes sur un couple de valeurs sont en général :
- l'introduction d'une nouvelle valeur lorsque les deux valeurs étaient identiques : A,A -> A,B,
- la suppression d'une valeur lorsque les deux valeurs étaient différentes : A,B -> A,A,
- le décalage du couple de valeurs : A,B -> A',B' (en fait, A,B' ou A',B).

Un profil ADN STR étant composé de N couples de valeurs (A,B), il y a en général au maximum une erreur parmi les N couples avec une différence sur A et B de l'ordre de +/-1, +0,1 (ou -0,9), +0.2 (-0,8), +0.3 (-0,7).

Ces erreurs sont à prendre en compte afin d'éviter de rejeter une demande d'authentification légitime d'un individu en raison d'une différence entre la première donnée d'authentification tronquée et une deuxième donnée d'authentification tronquée générée par une telle erreur.

En considérant que le nombre d'erreurs courantes possibles à prendre en compte s'élève à 16 erreurs possibles et qu'un profil peut contenir une de ces erreurs positionnée sur n'importe lequel de ses N couples, 16N profils dérivés peuvent être obtenus à partir du profil de départ dénué d'erreur. L'ensemble de ces erreurs constitue alors un ensemble d'erreurs tolérables déterminé.

Le cas échéant, par exemple, s'il est connu que l'extraction du profil subit un biais spécifique, d'autres cas d'erreurs peuvent être envisagés.

Pour prendre en compte des erreurs lors de la création d'un certificat ou au cours d'une opération d'authentification, des données biométriques incorporant une des erreurs peuvent être dérivées des données biométriques de l'utilisateur par ajout de ces erreurs tolérables (epsilon) aux données biométriques acquises lors des étapes d'acquisition de données biométriques.

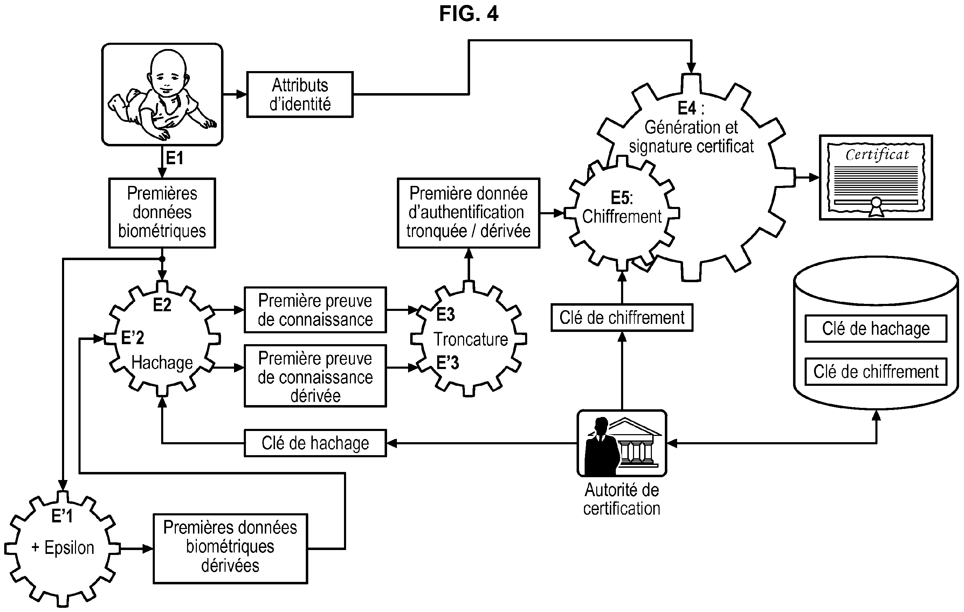

Une mise en œuvre du procédé de génération d'une donnée d'authentification biométrique prenant en compte certaines de ces erreurs lors de la création d'un certificat, représenté en **figure 4** comprend alors en outre, pour au moins une erreur à traiter parmi un ensemble d'erreurs tolérables déterminé :
- une troisième étape de génération E'1 de premières données biométriques dérivées en ajoutant ladite erreur aux premières données biométriques acquises,
- une quatrième étape de génération E'2 de premières preuves de connaissance dérivées à partir des premières données biométriques dérivées générées et de ladite fonction pseudo aléatoire, et
- une cinquième étape de génération E'3 de premières données d'authentification tronquées dérivées en appliquant ladite fonction de troncature auxdites premières preuves de connaissance dérivées générées.

Une donnée d'authentification tronquée dérivée peut ainsi être générée pour chaque erreur à traiter.

### Génération d'un certificat biométrique

Afin de générer un certificat biométrique à partir d'une première donnée d'authentification tronquée obtenue à la première étape de troncature E3, et éventuellement de premières données biométriques tronquées dérivées obtenues à la cinquième étape de génération E'3 de premières données d'authentification tronquées dérivées, le dispositif de traitement 3 de données de l'autorité de certification 4 met en œuvre un procédé de génération de certificat illustré en **figure 3**. Le certificat biométrique 2 est généré lors d'une étape de génération de certificat E4 à partir des données relatives à l'identité de l'utilisateur (ou attributs d'identité) ainsi que des données d'authentification tronquées obtenues à la première étape de troncature E3 ou à la cinquième étape de génération E'3 de premières données d'authentification tronquées dérivées. Le certificat généré est signé par l'autorité de certification 4.

Le certificat généré 2 comprend alors l'ensemble des données d'authentification tronquées et des données d'authentification tronquées dérivées générées lors des étapes de génération de données d'authentification tronquées E3 et E'3. Si une des erreurs tolérables traitées devait se produire lors d'une authentification future, la donnée d'authentification tronquée dérivée correspondante serait trouvée dans le certificat et permettrait d'authentifier tout de même l'individu.

Les données d'authentification tronquées peuvent être incluses dans le certificat sous une forme protégée à l'aide d'une clé de chiffrement secrète détenue par l'autorité de certification. L'étape de génération du certificat pour un utilisateur comprend alors une étape de chiffrement E5 des données d'authentification tronquées de l'utilisateur. Les données d'authentification tronquées peuvent être protégées en réalisant une opération de type XOR entre la clé de chiffrement secrète et lesdites données d'authentification tronquées, ladite clé de chiffrement secrète pouvant alors être qualifiée de masque. Les données d'authentification tronquées peuvent être protégées en étant chiffrées à l'aide d'un algorithme de chiffrement utilisé avec la clé de chiffrement de l'autorité de certification, tel que l'algorithme AES.

Une telle protection des données d'authentification tronquées permet de rendre ces données inexploitables sans le concours de l'autorité de certification 4. Elle permet également, dans le cas où l'autorité de certification 4 utilise pour chaque individu une clé de chiffrement différente, d'éviter l'échange d'identité entre deux individus présentant des profils ADN STR tels que les mêmes données d'identité biométriques tronquées sont obtenues pour ces individus à partir de leurs profils à l'issue de la première étape de troncature E3.

De telles données d'authentification tronquées protégées permettant de générer un certificat peuvent être conservées pendant toute la durée de vie de l'utilisateur ou bien pendant une durée fixée par exemple à 100 ans. Les données d'authentification tronquées peuvent également être protégées de manière périodique à l'aide des derniers protocoles de chiffrement développés.

### Authentification

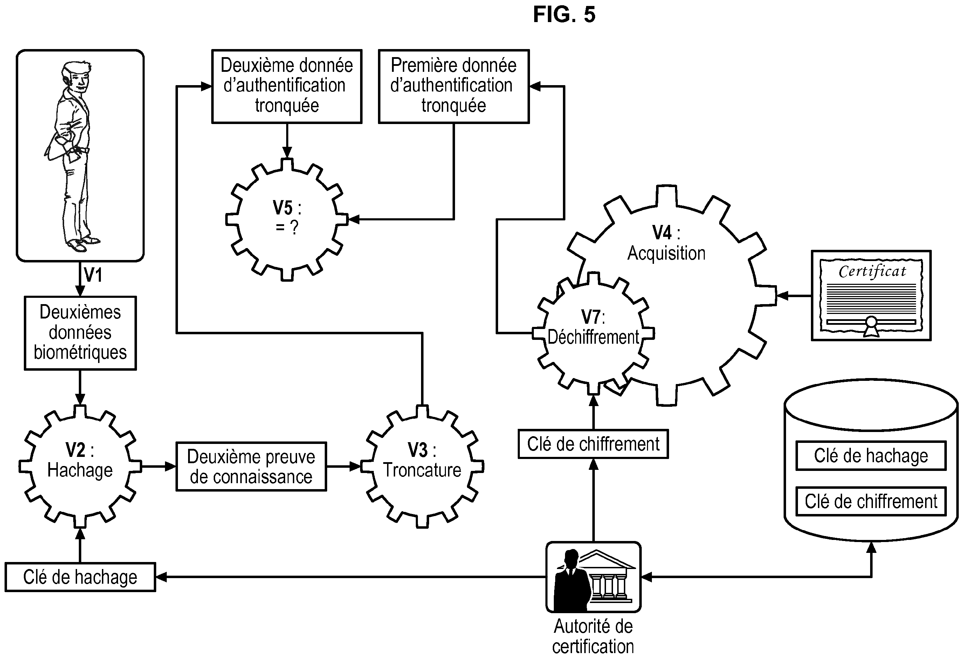

A l'issue de l'étape de génération de certificat E4, l'utilisateur peut détenir un certificat biométrique comprenant au moins une première donnée d'authentification tronquée dudit utilisateur. Il peut alors être authentifié à l'aide de ce certificat biométrique en mettant en œuvre un procédé d'authentification illustré en **figure 5****.**

Plus précisément, de la même manière que réalisée pour la mise en œuvre des étapes E1 à E3, le dispositif de traitement 6 du laboratoire 7 acquièrent tout d'abord des deuxièmes données biométriques dudit utilisateur 1 à authentifier lors d'une deuxième étape d'acquisition V1.

Puis, une deuxième preuve de connaissance desdites deuxièmes données biométriques est générée à partir des deuxièmes données biométriques acquises et de la fonction pseudo aléatoire lors d'une deuxième étape de génération de preuve V2 pouvant être mise en œuvre par le dispositif de traitement du laboratoire 7, de l'entité de génération de données d'authentification 9 ou de l'autorité de certification 4.

Une deuxième donnée d'authentification tronquée est ensuite générée en appliquant la fonction de troncature à ladite deuxième preuve de connaissance générée lors d'une deuxième étape de troncature V3 pouvant être mise en œuvre par le dispositif de traitement du laboratoire 7, de l'entité de génération de données d'authentification 9 ou de l'autorité de certification 4.

Afin de vérifier l'identité de l'individu, la première donnée d'authentification tronquée ou une première donnée d'authentification tronquée dérivée peut ensuite être extraite de son certificat lors d'une troisième étape d'acquisition V4 pouvant être mise en œuvre par le dispositif de traitement du laboratoire 7, de l'entité de génération de données d'authentification 9 ou de l'autorité de certification 4. Si la première donnée d'authentification a été protégée, l'autorité de certification 4 fournit la clé de chiffrement secrète utilisée pour protéger cette donnée et la troisième étape d'acquisition V4 peut alors comprendre une étape de déchiffrement V7, à l'aide de la clé de chiffrement, de la première donnée d'authentification tronquée chiffrée.

Ladite première donnée d'authentification tronquée ou la première donnée d'authentification tronquée dérivée et ladite deuxième donnée d'authentification tronquée sont ensuite comparées lors d'une première étape de comparaison V5. Si la comparaison est positive, ledit utilisateur est alors correctement authentifié.

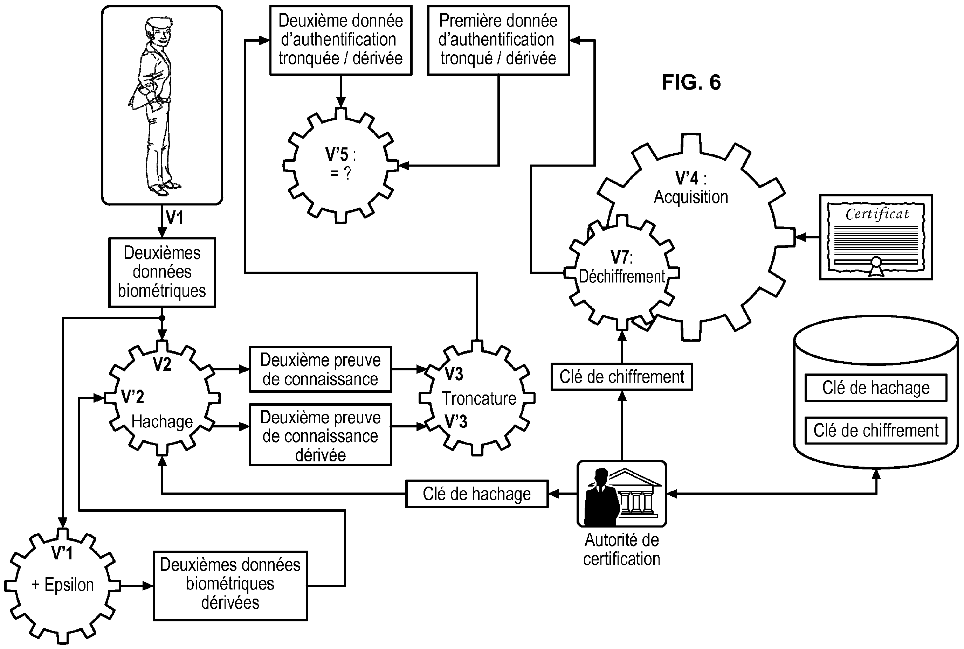

Certaines des erreurs tolérables peuvent également être prises en compte lors de l'authentification d'un individu. Une mise en œuvre correspondante du procédé d'authentification d'un utilisateur 1 détenant un certificat 2, représentée en **figure 6****,** comprend alors en outre :
- pour au moins une erreur tolérable à tester parmi un ensemble d'erreurs tolérables déterminé, une sixième étape de génération V'1 de deuxièmes données biométriques dérivées en ajoutant ladite erreur aux deuxièmes données biométriques acquises;
- pour chaque erreur à tester, une septième étape de génération V'2 d'une deuxième preuve de connaissance dérivée à partir des deuxièmes données biométriques dérivées générées et de ladite fonction pseudo aléatoire et une huitième étape de génération V'3 d'une deuxième donnée d'authentification tronquée dérivée en appliquant ladite fonction de troncature à ladite deuxième preuve de connaissance dérivée générée,
- une quatrième étape d'acquisition V'4 d'une première donnée d'authentification tronquée ou d'une première donnée d'authentification tronquée dérivée obtenue à partir dudit certificat ;
- une deuxième étape de comparaison V'5 de la première donnée d'authentification tronquée ou de la première donnée d'authentification tronquée dérivée acquises à l'étape d'acquisition V'4 et des deuxièmes données d'authentification tronquées dérivées générées à la huitième étape de génération V'3.

Si la première donnée d'authentification a été protégée, l'autorité de certification 4 fournit la clé de chiffrement secrète utilisée pour protéger cette donnée et la quatrième étape d'acquisition V'4 peut alors comprendre une étape de déchiffrement V7, à l'aide de la clé de chiffrement, de la première donnée d'authentification tronquée dérivée ou non chiffrée.

La plupart du temps seule une erreur tolérable à tester permet de générer une donnée d'authentification tronquée dérivée identique à la première donnée d'authentification tronquée du certificat permettant ainsi d'authentifier l'utilisateur.

Il est possible de combiner les deux modes de prise en compte des erreurs décrits ci-dessus, lors de la création du certificat et lors de l'authentification. Certaines erreurs tolérables peuvent par exemple être prises en compte lors de la création du certificat, par exemple les plus probables, et le reste des erreurs tolérables lors de l'authentification.

Si aucune donnée d'authentification tronquée générée n'est identique à une donnée d'authentification tronquée du certificat alors l'utilisateur n'est pas authentifié. Il est alors possible de réaliser de nouvelles acquisitions de données biométriques de l'utilisateur par la même entité de génération de données d'authentification ou par une entité différente pour pouvoir réaliser de nouvelles comparaisons.

### Modes de mise en œuvre des preuves de connaissance :

Dans un mode de mise en œuvre illustré sur les figures 3 à 8, la fonction pseudo aléatoire utilisée pour générer les première et deuxième preuves de connaissances lors des étapes de génération de preuves E2, E'2, V2 et V'2 peut être une fonction de hachage. Un hash des données biométriques de l'utilisateur est alors généré en appliquant la fonction de hachage aux données biométriques de l'utilisateur. Une telle fonction de hachage permet d'obtenir des données d'authentification tronquées déterministes, non réversibles et peu sensibles aux collisions (c'est à dire qui ont des valeurs différentes même si les données biométriques permettant de les générer sont très proches). Une telle fonction de hachage peut être l'algorithme SHA-256 permettant de générer un vecteur de 256 bits comme preuve de connaissance.

Dans une variante de mise en œuvre, le dispositif de traitement de données 3 de l'autorité de certification 4 peut détenir une clé de hachage secrète. Un hash des données biométriques peut alors être généré en appliquant la fonction de hachage aux données biométriques de l'utilisateur et à la clé de hachage secrète. L'utilisation d'une telle clé de hachage secrète permet d'augmenter l'entropie du hash généré. Cette clé de hachage secrète peut être conservée par l'autorité de certification 4 et gardée secrète par celle-ci. L'autorité de certification peut le cas échéant la fournir à l'entité chargée d'appliquer la fonction de hachage pour que cette dernière génère les preuves de connaissance.

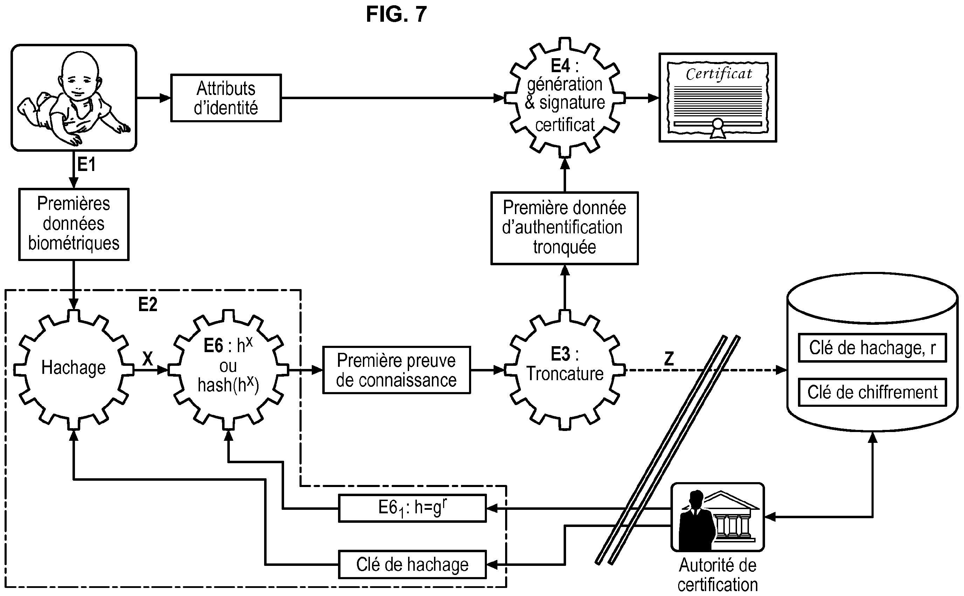

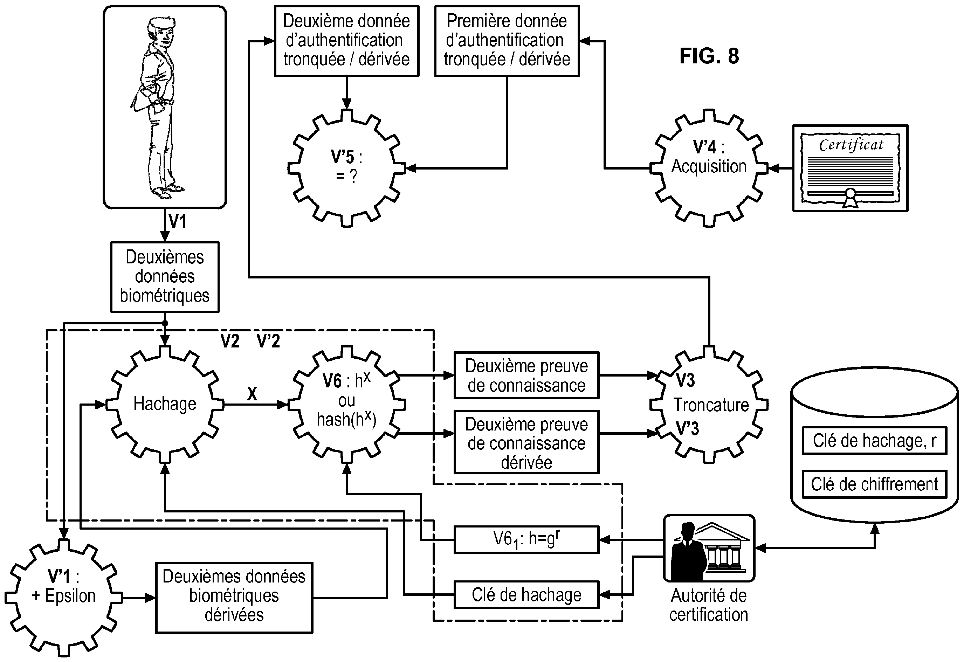

Dans un autre mode de mise en œuvre illustré en figure 7 et en figure 8, les première et deuxième preuves de connaissances générées lors des étapes de génération de preuves E2, E'2, V2 et V'2 peuvent être obtenues en calculant, lors d'étapes de calcul E6, V6, une exponentiation modulaire d'une valeur uniformément distribuée X obtenue à partir des données biométriques et de la fonction pseudo aléatoire. L'utilisation d'une telle exponentiation modulaire pour générer les données d'authentification tronquées avant leur stockage permet qu'aucune personne malveillante ne puisse accéder facilement aux données biométriques de l'utilisateur à partir des données stockées.

Plus précisément, dans ce mode de mise en œuvre, un paramètre de dérivation h peut être acquis par le dispositif de traitement de données 3 de l'autorité de certification 4, lors d'une cinquième étape d'acquisition E61, V61. Ce paramètre de dérivation peut être obtenu en réalisant une opération d'exponentiation ^ (par exemple sur une courbe elliptique ou un corps fini) et vérifier la formule : h = g^r avec r un nombre aléatoire, g un générateur d'un groupe d'ordre premier p, g et p étant des données publiques. Puis, à partir de ce paramètre de dérivation h, transmis le cas échéant à l'entité chargée de générer les preuves de connaissance si cette dernière n'est pas l'autorité de certification, la preuve de connaissance peut être calculée à l'aide de la formule : h^X ou hash(h^X) avec X une valeur obtenue à partir desdites données biométriques et de la fonction pseudo aléatoire et hash une fonction de hachage.

Le nombre aléatoire r peut de manière optionnelle dépendre de l'identité de l'utilisateur. Ce nombre peut être conservé par l'autorité de certification 4 qui peut le cas échéant le fournir à l'entité chargée de générer les preuves de connaissance.

### Troncature

S'il est estimé qu'aucune erreur n'a été générée, la longueur de la troncature peut être de 10 bits. Comme décrit ci-dessus, une telle longueur permet en effet de générer 1024 vecteurs de preuve de connaissance. Elle ne permet donc pas d'identifier un individu parmi la population comptant plus de 1024 individus mais permet en revanche de l'authentifier avec un taux de faux positif égal à 0.098 %.

Sinon, c'est-à-dire si au moins une erreur est anticipée, alors la longueur de la troncature n choisie peut dépendre du nombre d'erreurs à tester déterminé E. En effet, la probabilité de faux positif est environ égale à E/2ⁿ. La longueur de la troncature est alors fixée de manière à réaliser le meilleur compromis possible entre le taux de fausses collisions acceptés et le potentiel discriminant de la donnée d'authentification tronquée.

Dans l'hypothèse où les erreurs à tester sont considérées équiprobables, pour obtenir une probabilité de fausses collisions à peu près égale à 1/1000, la longueur de la troncature peut être fixée à log2 (1000*E), E étant le nombre d'erreurs tolérables. La valeur entière supérieure de log2 (1000*E) peut être choisie comme longueur de troncature afin d'obtenir une probabilité de fausse collision inférieure ou égale à 1/1000.

Ainsi si on souhaite prendre en compte 16 types d'erreurs pouvant être positionnées sur n'importe quel couple d'allèles parmi 10 couples d'allèles, soit E=160 erreurs à prendre en compte, la longueur de la troncature pourra être égale à 18. En revanche, si le nombre de couples d'allèles est égal à 23, soit E=230 erreurs à prendre en compte, la longueur de la troncature pourra être égale à 19.

Dans l'hypothèse où les erreurs à tester sont considérées non équiprobables, la longueur de la troncature peut être calculée en pondérant le nombre d'erreurs tolérables par leur probabilité d'occurrence. Par exemple si la probabilité qu'aucune erreur ne survienne est égale à 90%, que quatre types d'erreurs peuvent se produire avec une probabilité égale à 8% et que les erreurs restantes (E-5) ont une probabilité de 2% de se produire, alors pour obtenir une probabilité de fausses collisions à peu près égale à 1/1000, la longueur de la troncature n est égale à log2 (1000*(90%*1 + 8%*4 + 2%*(E-5))).

Ainsi, si le nombre de couples d'allèles est égal à 10 alors la longueur de la troncature peut être égale à 12 et en revanche, si le nombre de couples d'allèles est égal à 23 alors la longueur de la troncature peut être égale à 13.

## Revendications

1. Procédé de génération d'un certificat biométrique d'un utilisateur mis en œuvre par un dispositif de traitement de données (3) d'une autorité de certification (4), le procédé comprenant une étape de génération (E4) d'un certificat (2) pour ledit utilisateur (1) comprenant des données relatives à l'identité de l'utilisateur et des données d'authentification tronquées dudit utilisateur générées selon un procédé de génération d'une donnée d'authentification biométrique,
dans lequel les données d'authentification tronquées comprennent une première donnée d'authentification tronquée et au moins une première donnée d'authentification tronquée dérivée,
le procédé de génération d'une donnée d'authentification biométrique comprenant des étapes de :
- acquisition (E1) de premières données biométriques dudit utilisateur,
- pour au moins une erreur à traiter parmi un ensemble d'erreurs tolérables prédéterminé, génération (E'1) de premières données biométriques dérivées, en ajoutant ladite erreur à traiter aux premières données biométriques acquises ;
- génération (E2) d'une première preuve de connaissance desdites premières données biométriques, à partir des premières données biométriques acquises et d'une fonction pseudo aléatoire, et génération (E'2) de premières preuves de connaissance dérivées, à partir des premières données biométriques dérivées générées et de la fonction pseudo aléatoire ;
- génération (E3) de la première donnée d'authentification tronquée, en appliquant une fonction de troncature à ladite première preuve de connaissance générée, et génération (E'3) des premières données d'authentification tronquées dérivées en appliquant la fonction de troncature aux premières preuves de connaissance dérivées générées.

2. Procédé de génération d'un certificat biométrique selon la revendication 1, dans lequel le dispositif de traitement de données (3) de l'autorité de certification (4) détient une clé de chiffrement secrète, l'étape de génération du certificat (2) pour ledit utilisateur (1) comprenant une étape de chiffrement (E5) des données d'authentification tronquées dudit utilisateur.

3. Procédé d'authentification d'un utilisateur (1) détenant un certificat (2) biométrique généré selon le procédé de génération de certificat de l'une des revendications 1 ou 2, ledit procédé d'authentification comprenant des étapes de :
- acquisition (V1) de deuxièmes données biométriques dudit utilisateur à authentifier ;
- pour au moins une erreur tolérable à tester parmi un ensemble d'erreurs tolérables déterminé, génération (V'1) de deuxièmes données biométriques dérivées en ajoutant ladite erreur aux deuxièmes données biométriques acquises ;
- génération (V2) d'une deuxième preuve de connaissance desdites deuxièmes données biométriques à partir des deuxièmes données biométriques acquises et de ladite fonction pseudo aléatoire, et génération (V'2) d'une deuxième preuve de connaissance dérivée à partir des deuxièmes données biométriques dérivées générées et de ladite fonction pseudo aléatoire ;
- génération (V3) d'une deuxième donnée d'authentification tronquée en appliquant ladite fonction de troncature à ladite deuxième preuve de connaissance générée, et génération (V'3) d'une deuxième donnée d'authentification tronquée dérivée en appliquant ladite fonction de troncature à ladite deuxième preuve de connaissance dérivée générée ;
- acquisition (V4) de la première donnée d'authentification tronquée ou d'une première donnée d'authentification tronquée dérivée stockée dans le certificat ;
- comparaison (V5) de la première donnée d'authentification tronquée ou de la première donnée d'authentification tronquée dérivée et de ladite deuxième donnée d'authentification tronquée, et comparaison (V'5) de la première donnée d'authentification tronquée ou de la première donnée d'authentification tronquée dérivée et de la deuxième donnée d'authentification tronquée dérivée.

4. Procédé d'authentification selon la revendication 3 d'un utilisateur (1) détenant un certificat biométrique (2) généré selon le procédé de génération de certificat de la revendication 2,
dans lequel l'étape d'acquisition (V4, V'4) de la première donnée d'authentification tronquée comprend une étape de déchiffrement (V7), à l'aide de la clé de chiffrement, de la première donnée d'authentification tronquée chiffrée acquise.

5. Procédé selon l'une des revendications précédentes, dans lequel l'étape de génération d'une preuve de connaissance de données biométriques comprend une étape de génération d'un hash des données biométriques mise en œuvre en appliquant une fonction de hachage aux données biométriques (E2, E'2, V2, V'2).

6. Procédé selon la revendication précédente, dans lequel la preuve de connaissance est générée à l'aide de ladite fonction de hachage et d'une clé de hachage secrète stockée uniquement par l'autorité de certification.

7. Procédé selon l'une des revendications précédentes, dans lequel l'étape de génération d'une preuve de connaissance de données biométriques comprend une étape de calcul (E6, V6) d'une exponentiation modulaire d'une valeur uniformément distribuée obtenue à partir des données biométriques et de ladite fonction pseudo aléatoire.

8. Procédé selon la revendication précédente, dans lequel l'étape de génération d'une preuve de connaissance de données biométriques comprend en outre des étapes de :
- acquisition (E61, V61) d'un paramètre de dérivation h vérifiant la formule : h = g^r avec r un nombre aléatoire, g un générateur d'un groupe d'ordre premier p, g et p étant des données publiques ;
- calcul (E6, V6) de la preuve de connaissance à l'aide de la formule : h^X ou hash(h^X) avec X une valeur obtenue à partir desdites données biométriques et de ladite fonction pseudo aléatoire, et hash une fonction de hachage.

9. Procédé selon l'une des revendications précédentes, dans lequel la fonction de troncature applique une troncature sur n bits, n étant fonction de la probabilité d'occurrence des erreurs tolérables.

10. Produit programme d'ordinateur comprenant des instructions de code de programme pour l'exécution des étapes du procédé selon l'une quelconque des revendications précédentes, lorsque ledit programme est exécuté sur un ordinateur.

11. Serveur de certification (3) **caractérisé en ce qu'**il comprend un dispositif de traitement de données configuré pour mettre en œuvre un procédé de génération d'un certificat biométrique d'un utilisateur selon la revendication 1.

## Patentansprüche

1. Verfahren zum Generieren eines biometrischen Zertifikats eines Benutzers, das von einer Datenverarbeitungsvorrichtung (3) einer Zertifizierungsbehörde (4) durchgeführt wird, wobei das Verfahren einen Schritt des Generierens (E4) eines Zertifikats (2) für den Benutzer (1) umfasst, umfassend Daten, die sich auf die Identität des Benutzers beziehen und trunkierte Authentifizierungsdaten des Benutzers, die gemäß einem Verfahren zum Generieren eines biometrischen Authentifizierungs-Datenelements erzeugt werden,
wobei die trunkierten Authentifizierungsdaten ein erstes trunkiertes Authentifizierungs-Datenelement und mindestens ein erstes abgeleitetes trunkiertes Authentifizierungs-Datenelement umfassen,
wobei das Verfahren zum Generieren eines biometrischen Authentifizierungs-Datenelements folgende Schritte umfasst:
- Erfassen (E1) von ersten biometrischen Daten des Benutzers;
- für mindestens einen zu verarbeitenden Fehler einer vorher festgelegten Einheit tolerierbarer Fehler, Generieren (E'1) erster abgeleiteter biometrischer Daten durch Hinzufügen des zu verarbeitenden Fehlers zu den erfassten ersten biometrischen Daten;
- Generieren (E2) eines ersten Kenntnisbeweises der ersten biometrischen Daten ausgehend von den erfassten ersten biometrischen Daten und einer Pseudozufallsfunktion, und Generieren (E'2) erster abgeleiteter Kenntnisbeweise ausgehend von den ersten generierten abgeleiteten biometrischen Daten und der Pseudozufallsfunktion;
- Generieren (E3) des ersten trunkierten Authentifizierungs-Datenelements durch Anwendung einer Trunkierungsfunktion auf den generierten ersten Kenntnisbeweis, und Generieren (E'3) der ersten abgeleiteten trunkierten Authentifizierungsdaten durch Anwendung der Trunkierungsfunktion auf die ersten generierten abgeleiteten Kenntnisbeweise.

2. Verfahren zum Generieren eines biometrischen Zertifikats nach Anspruch 1, wobei die Datenverarbeitungsvorrichtung (3) der Zertifizierungsbehörde (4) einen geheimen Chiffrierungsschlüssel besitzt, wobei der Schritt des Generierens des Zertifikats (2) für den Benutzer (1) einen Schritt des Chiffrierens (E5) der trunkierten Authentifizierungsdaten des Benutzers umfasst.

3. Authentifizierungsverfahren eines Benutzers (1), das ein gemäß dem Verfahren zum Generieren eines Zertifikats nach einem der Ansprüche 1 oder 2 generiertes biometrisches Zertifikat (2) besitzt, wobei das Authentifizierungsverfahren folgende Schritte umfasst:
- Erfassen (V1) von zweiten biometrischen Daten des zu authentifizierenden Benutzers;
- für mindestens einen zu testenden tolerierbaren Fehler einer festgelegten Einheit tolerierbarer Fehler, Generieren (V'1) von zweiten abgeleiteten biometrischen Daten durch Hinzufügen des Fehlers zu den erfassten zweiten biometrischen Daten;
- Generieren (V2) eines zweiten Kenntnisbeweises der zweiten biometrischen Daten ausgehend von den erfassten zweiten biometrischen Daten und der Pseudozufallsfunktion, und Generieren (V'2) eines abgeleiteten zweiten Kenntnisbeweises ausgehend von den zweiten generierten abgeleiteten biometrischen Daten und der Pseudozufallsfunktion;
- Generieren (V3) eines zweiten trunkierten Authentifizierungs-Datenelements durch Anwendung der Trunkierungsfunktion auf den zweiten generierten Kenntnisbeweis, und Generieren (V'3) eines zweiten abgeleiteten trunkierten Authentifizierungs-Datenelements durch Anwendung der Trunkierungsfunktion auf den zweiten generierten abgeleiteten Kenntnisbeweis;
- Erfassen (V4) des ersten trunkierten Authentifizierungs-Datenelements oder eines ersten abgeleiteten trunkierten Authentifizierungs-Datenelements, das in dem Zertifikat gespeichert ist;
- Vergleichen (V5) des ersten trunkierten Authentifizierungs-Datenelements oder des ersten abgeleiteten trunkierten Authentifizierungs-Datenelements und des zweiten trunkierten Authentifizierungs-Datenelements, und Vergleichen (V'5) des ersten trunkierten Authentifizierungs-Datenelements oder des ersten abgeleiteten trunkierten Authentifizierungs-Datenelements und des zweiten abgeleiteten trunkierten Authentifizierungs-Datenelements.

4. Authentifizierungsverfahren nach Anspruch 3 eines Benutzers (1), das ein gemäß den Verfahren zum Generieren eines Zertifikats nach Anspruch 2 generiertes biometrisches Zertifikat (2) besitzt,
wobei der Erfassungsschritt (V4, V'4) des ersten trunkierten Authentifizierungs-Datenelements einen Entschlüsselungsschritt (V7), mit Hilfe des Chiffrierungsschlüssels, des ersten erfassten chiffrierten trunkierten Authentifizierungs-Datenelements umfasst.

5. Verfahren nach einem der vorangehenden Ansprüche, wobei der Schritt des Generierens eines Kenntnisbeweises biometrischer Daten einen Schritt des Generierens eines Hashs der biometrischen Daten umfasst, der durch Anwendung einer Hash-Funktion auf die biometrischen Daten (E2, E'2, V2, V'2) durchgeführt wird.

6. Verfahren nach vorangehendem Anspruch, wobei der Kenntnisbeweis mit Hilfe der Hash-Funktion und einem geheimen Hash-Schlüssel generiert wird, der nur von der Zertifizierungsbehörde gespeichert wird.

7. Verfahren nach einem der vorangehenden Ansprüche, wobei der Schritt des Generierens eines Kenntnisbeweises biometrischer Daten einen Berechnungsschritt (E6, V6) einer modularen Exponentiation eines gleichmäßig verteilten Werts umfasst, erhalten ausgehend von den biometrischen Daten und der Pseudozufallsfunktion.

8. Verfahren nach vorangehendem Anspruch, wobei der Schritt des Generierens eines Kenntnisbeweises biometrischer Daten ferner folgende Schritte umfasst:
- Erfassen (E61, V61) eines Ableitungsparameters h, der die Formel h = g^r verifiziert, mit r als eine Zufallszahl, g als ein Generator einer Gruppe erster Ordnung p, wobei g und p öffentliche Daten sind;
- Berechnen (E6, V6) des Kenntnisbeweises mit Hilfe der Formel h^X oder hash(h^X) mit X als ein Wert, erhalten ausgehend von den biometrischen Daten und der Pseudozufallsfunktion, und Hash eine Hash-Funktion.

9. Verfahren nach einem der vorangehenden Ansprüche, wobei die Trunkierungsfunktion eine Trunkierung auf n Bits anwendet, wobei n von der Wahrscheinlichkeit des Vorliegens der tolerierbaren Fehler abhängt.

10. Rechnerprogrammprodukt, umfassend Programmecodes für die Ausführung der Schritte des Verfahrens nach einem der vorangehenden Ansprüche, wenn das Programm auf einem Rechner ausgeführt wird.

11. Zertifizierungsserver (3), **dadurch gekennzeichnet, dass** er eine Datenverarbeitungsvorrichtung umfasst, die ausgelegt ist, um ein Verfahren zum Generieren eines biometrischen Zertifikats eines Benutzers nach Anspruch 1 durchzuführen.

## Claims

1. A method of generating a biometric certificate of a user performed by a data processing device (3) of a certifying authority (4), the method comprising a step of generating (E4) a certificate (2) for said user (1) comprising data related to the identity of the user and truncated authentication data of said user generated according to a method of generating a biometric authentication datum,
wherein the truncated authentication data comprise a first truncated authentication datum and at least a first derived truncated authentication datum,
the method of generating a biometric authentication datum comprising steps of:
- acquiring (E1) first biometric data of said user,
- for at least one error to be processed among a determined set of tolerable errors, generating (E'1) first derived biometric data, by adding said error to be processed to the first acquired biometric data;
- generating (E2) a first proof of knowledge of said first biometric data from the first acquired biometric data and from a pseudo-random function, and generating (E'2) first derived proofs of knowledge from the generated first derived biometric data and from the pseudo-random function;
- generating (E3) the first truncated authentication datum by applying a truncation function to said generated first proof of knowledge, and generating (E'3) the first derived truncated authentication data by applying the truncation function to the generated first derived proofs of knowledge.

2. The method of generating a biometric certificate according to claim 1, wherein the data processing device (3) of the certifying authority (4) holds a secret encryption key, the certificate generating step (2) for said user (1) comprising an encryption step (E5) of the truncated authentication data of said user.

3. A method of authenticating a user (1) holding a biometric certificate (2) generated according to the certificate generating method of one of claims 1 or 2, said authentication method comprising steps of:
- acquiring (V1) second biometric data of said user to be authenticated;
- for at least one tolerable error to be tested among a determined set of tolerable errors, generating (V'1) second derived biometric data by adding said error to the second acquired biometric data;
- generating (V2) a second proof of knowledge of said second biometric data from the second acquired biometric data and from said pseudo-random function, and generating (V'2) a second derived proof of knowledge from the second generated derived biometric data and from said pseudo-random function;
- generating (V3) a second truncated authentication datum by applying said truncation function to said second generated proof of knowledge, and generating (V'3) a second derived truncated authentication datum by applying said truncation function to said second generated derived proof of knowledge;
- acquiring (V4) the first truncated authentication datum or a first derived truncated authentication datum stored in the certificate;
- comparing (V5) the first truncated authentication datum or the first derived truncated authentication datum with said second truncated authentication datum, and comparing (V'5) the first truncated authentication datum or the first derived truncated authentication datum with the second derived truncated authentication datum.

4. The authentication method according to claim 3 to authenticate a user (1) holding a biometric certificate (2) generated in accordance with the certificate generation method of claim 2,
wherein the acquisition step (V4, V'4) of the first truncated authentication datum comprises a decryption step (V7) using the encryption key of the first acquired encrypted truncated authentication datum.

5. The method according to one of the preceding claims, wherein the step of generating a proof of knowledge of biometric data comprises a step of generating a hash of the biometric data performed by applying a hash function to the biometric data (E2, E'2, V2, V'2).

6. The method according to the preceding claim, wherein the proof of knowledge is generated using said hash function and a secret hash key stored solely by the certifying authority.

7. The method according to one of the preceding claims, wherein the step of generating a proof of knowledge of biometric data comprises a step of calculating (E6, V6) a modular exponentiation of a uniformly distributed value obtained from the biometric data and from said pseudo-random function.

8. The method according to the preceding claim, wherein the step of generating a proof of knowledge of biometric data further comprises steps of:
- acquiring (E61, V61) a derivation parameter h verifying the formula: h = g^r where r is a random number, g a generator of a group of prime order p, g and p being public data;
- calculating (E6, V6) the proof of knowledge using the formula: h^X or hash(h^X) with X being a value obtained from said biometric data and from said pseudo-random function, and hash being a hashing function.

9. The method according to one of the preceding claims, wherein the truncation function applies truncation over n bits, n being a function of the probability of occurrence of the tolerable errors.

10. A computer program product comprising program code instructions to implement the steps of the method according to any one of the preceding claims, when said program is run on a computer.

11. A certification server (3) **characterized in that** it comprises a data processing device configured to carry out a method of generating a biometric certificate of a user according to claim 1.
